# EUROPEAN PATENT SPECIFICATION

(11) **EP 3 975 657 B1**
(45) Date of publication and mention of the grant of the patent: **12.02.2025**
(21) Application number: 19929719.3
(22) Date of filing: 23.05.2019
(51) Int. Cl.: H04W 76/15, H04W 74/0816, H04L 5/00, H04W 84/12

(54) **DATA TRANSMISSION METHOD, APPARATUS, AND STORAGE MEDIUM**
DATENÜBERTRAGUNGSVERFAHREN, -GERÄT UND SPEICHERMEDIUM
PROCÉDÉ, APPAREIL ET SUPPORT D'ENREGISTREMENT

(43) Date of publication of application: 30.03.2022
(73) Proprietor: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2019/088135
(87) International publication number: WO 2020/232699

(56) References cited:
- WO-A1-2006/000955
- WO-A1-2015/187556
- WO-A2-2010/021902
- CN-A- 104 812 088
- CN-A- 106 851 683
- CN-A- 108 990 027
- CN-A- 109 673 001
- GB-A- 2 549 967
- US-A1- 2018 049 198
- US-B2- 10 448 398
- US-B2- 9 338 789
- "IEEE Standard for Information technology--Telecommunications and information exchange between systems--Local and metropolitan area networks--Specific requirements Part 11: Wireless LAN Medium Access Control (MAC) and Physical Layer (PHY) Specifications Amendment 5: Enhancements for Higher Throughput", IEEE STANDARD, IEEE, PISCATAWAY, NJ, USA, 29 October 2009 (2009-10-29), pages c1 - 502, XP017604244, ISBN: 978-0-7381-6046-7

## Description

### TECHNICAL FIELD

The present disclosure relates to the field of communications, and in particular to a data transmission method, an apparatus and a storage medium.

### BACKGROUND

In the next generation of wireless fidelity (Wi-Fi) technologies, a research scope includes: 320MHz bandwidth transmission, aggregation and coordination transmission of multiple frequency bands, etc.. The proposed vision improves speed and throughput by at least four times compared with the existing Institute of Electrical and Electronics Engineers (IEEE) 802.11ax. Main application scenarios include video transmission, augmented reality (AR), virtual reality (VR), etc..

The aggregation and coordination transmission of multiple frequency bands refer to simultaneous communication between devices on frequency bands of 2.4GHz, 5.8GHz, and 6-7GHz. In addition, the multiple frequency bands can also include millimeter wave frequency bands, such as 45GHz and 60GHz frequency bands. Related technologies are known from patent publication documents US2018049198A1, WO2010021902A2, GB2549967A and US9338789B2.

### SUMMARY

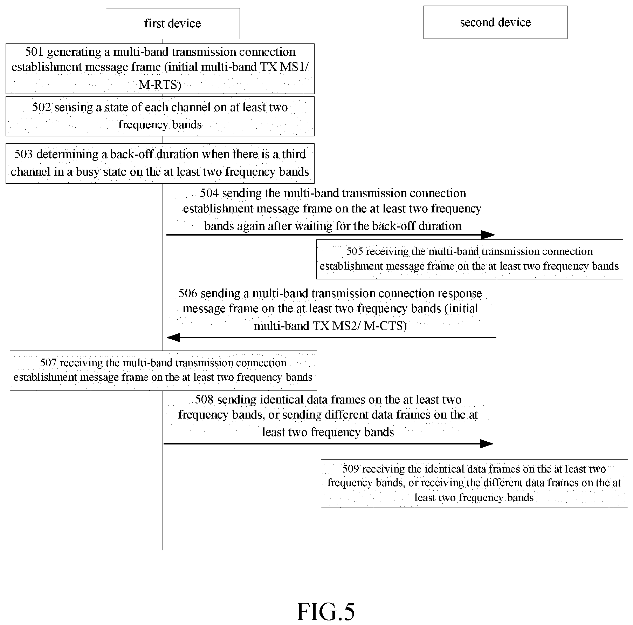

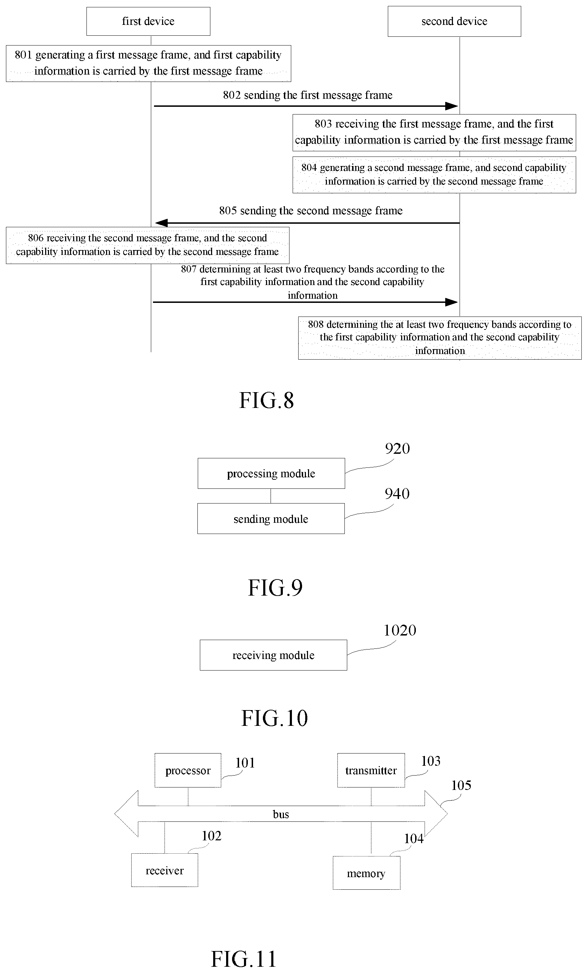

The invention is defined by the independent claims. **In the following description the subject-matter of** **figures 5** **and** **9** **and their descriptions is according to the invention as defined in the independent claims. The rest of the following description and figures (even if named embodiment(s)) does not or does not fully correspond to the invention as defined in the claims and is therefore not according to the invention as defined in the claims but is considered as useful for understanding the invention.**

The beneficial effects brought by the technical solutions provided by the present disclosure include at least:

by generating the multi-band transmission connection establishment message frame which is used to request the simultaneous transmission of the data frames on the at least two frequency bands, and sending the multi-band transmission connection establishment message frame, the data frames are sent on the at least two frequency bands, thereby achieving simultaneous data transmission on multiple frequency bands, and providing greater transmission rate and throughput.

### BRIEF DESCRIPTION OF THE DRAWINGS

In order to explain technical solutions in embodiments of the present disclosure more clearly, the following will briefly introduce drawings needed in the description of the embodiments. Obviously, the drawings in the following description are only some embodiments of the present disclosure. For those of ordinary skill in the art, other drawings can be obtained from these drawings without creative labor.
FIG. 1 is a block diagram of a communication system provided by an embodiment of the present disclosure;
FIG. 2 is a flowchart of a data transmission method provided by an embodiment of the present disclosure;
FIG. 3 is a flowchart of a data transmission method provided by an embodiment of the present disclosure;
FIG. 4 is a flowchart of a data transmission method provided by another embodiment of the present disclosure;
FIG. 5 is a flowchart of a data transmission method provided by another embodiment of the present disclosure;
FIG. 6 is a flowchart of a data transmission method provided by another embodiment of the present disclosure;
FIG. 7 is a flowchart of a random back-off mechanism on multiple frequency bands provided by another embodiment of the present disclosure;
FIG. 8 is a schematic diagram of a data transmission method provided by another embodiment of the present disclosure;
FIG. 9 is a schematic structural diagram of a data transmission apparatus provided by an embodiment of the present disclosure;
FIG. 10 is a schematic structural diagram of a data transmission apparatus provided by another embodiment of the present disclosure; and
FIG. 11 is a schematic structural diagram of a wireless communication device provided by another embodiment of the present disclosure.

### DETAILED DESCRIPTION

In order to make objectives, technical solutions, and advantages of the present disclosure clearer, the following will further describe embodiments of the present disclosure in detail with reference to the drawings.

A communication system and a business scenario described in the embodiments of the present disclosure are intended to explain the technical solutions of embodiments of the present disclosure more clearly, and do not constitute a limitation to the technical solutions provided by the embodiments of the present disclosure. The ordinary technicians in the art know that, with the evolution of the communication system and the emergence of new business scenarios, the technical solutions provided by the embodiments of the present disclosure are equally applied to similar technical issues.

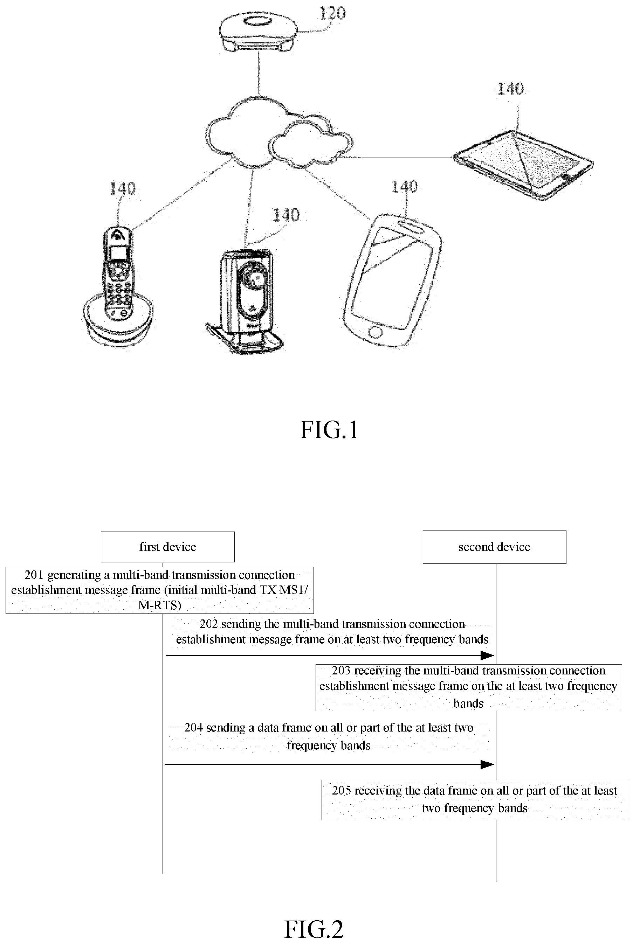

FIG. 1 shows a block diagram of a communication system provided by an embodiment of the present disclosure, and the communication system includes: a wireless access point (AP) 120 and a station 140.

The wireless access point 120 is used to provide a wireless access function, and may be a wireless router, a base station with a Wi-Fi function, or the like. Multiple stations 140 can access one wireless access point 120.

The station 140 accesses the wireless access point 120, and may be an apparatus such as a mobile phone, a tablet, a laptop, an e-book and an industrial machine.

The communication system may be an Institute of Electrical and Electronics Engineers (IEEE) 802.11a/b/g/n/ac/ax/be. In the embodiments of the present disclosure, the communication system being IEEE 802.11 be is taken as an example for description.

The communication system includes two networking forms:
a first form: an underlying wireless network organized based on the AP 120 (also called an Infra network), which is a wireless network which is created by the AP 120 and many STAs 140 access; characteristics of such network are in that the AP 120 is the center of the entire network, and all communications in the network are forwarded through the AP 120.

In this networking situation, a first device in the present disclosure may be one of the wireless access point 120 and the station 140, and a second device may be the other of the wireless access point 120 and the station 140.

A second form: a wireless network based on an ad-hoc network (also called an ad-hoc network), which is a network composed of only two or more STAs 140 themselves, and there is no AP 120 in the network; such network has a loose structure, and all STAs 140 in the network can communicate directly.

In this networking situation, the first device in the present disclosure may be a first station 140, and the second device may be a second station 140.

A RTS/CTS handshake mechanism has been widely used to solve a hidden terminal problem in a wireless network. The RTS/CTS handshake mechanism (the original handshake mechanism) stipulates that a first device has to send an RTS request frame to a second device before officially sending a data packet to the adjacent second device; after the second device receives the RTS, and if the second device determines that there are no hidden terminals around it, the second device returns a CTS reply frame to the first device; otherwise, the second device makes no response; only after receiving the CTS reply frame returned by the second device, the first device can send a data frame (DATA) to the second device; and after receiving the data frame from the first device, the second device needs to send a reply acknowledgement (ACK) frame to the first device.

FIG. 2 shows a flowchart of a data transmission method provided by an embodiment of the present disclosure. The method can be executed by the communication system shown in FIG. 1, and includes:
In step 201, the first device generates a multi-band transmission connection establishment message frame, and the multi-band transmission connection establishment message frame is used to request simultaneous transmission of data frames on at least two frequency bands.

The multi-band transmission connection establishment message frame is realized by using a management message frame or a control message frame.

In a case where the management message frame is used to realize the multi-band transmission connection establishment message frame, the management message frame may be an initial multi-band transmission request message frame (initial multi-band TX MS1); and in a case where the control message frame is used to realize the multi-band transmission connection establishment message frame, the control message frame may be a multi-band request to send (M-RTS) message frame.

In step 202, the first device sends the multi-band transmission connection establishment message frame on the at least two frequency bands.

The at least two frequency bands include: at least two frequency bands of the 2.4 GHz frequency band, the 5.8 GHz frequency band, and the 6-7 GHz frequency band. The at least two frequency bands also include other communication frequency bands supported by a Wi-Fi protocol. The at least two frequency bands also include millimeter wave frequency bands, such as the 45 GHz frequency band and the 60 GHz frequency band. In the embodiments of the present disclosure, the at least two frequency bands including three frequency bands of the 2.4 GHz frequency band, the 5.8 GHz frequency band, and the 6-7 GHz frequency band is taken as an example for illustration, but the embodiments of the present disclosure is not limited to this.

The first device simultaneously sends the multi-band transmission connection establishment message frame on the at least two frequency bands.

In step 203, the second device receives the multi-band transmission connection establishment message frame on the at least two frequency bands.

The second device also replies a multi-band clear to send (M-CTS) message frame to the first device on the at least two frequency bands, and the first device receives the M-CTS from the second device on the at least two frequency bands.

In step 204, the first device sends the data frames on the at least two frequency bands.

In step 205, the second device receives the data frame on the at least two frequency bands.

In summary, in the method provided by the embodiments of the present disclosure, by generating the multi-band transmission connection establishment message frame which is used to request the simultaneous transmission of the data frames on the at least two frequency bands, and sending the multi-band transmission connection establishment message frame, the data frames are sent on the at least two frequency bands, thereby achieving simultaneous data transmission on multiple frequency bands, and achieving greater transmission rate and throughput.

In the embodiments of the present disclosure, steps executed by the first device can be separately implemented as a data transmission method on the first device side, and steps executed by the second device can be separately implemented as a data transmission method on the second device side.

Both the first device and the second device supporting to perform data transmission on all candidate frequency bands (such as the three frequency bands of the 2.4GHz frequency band, the 5.8GHz frequency band and the 6-7GHz frequency band), and the three frequency bands of the 2.4GHz frequency band, the 5.8GHz frequency band and the 6-7GHz frequency band being all in a channel idle state are taken as an example, and the present disclosure provides the following embodiments.

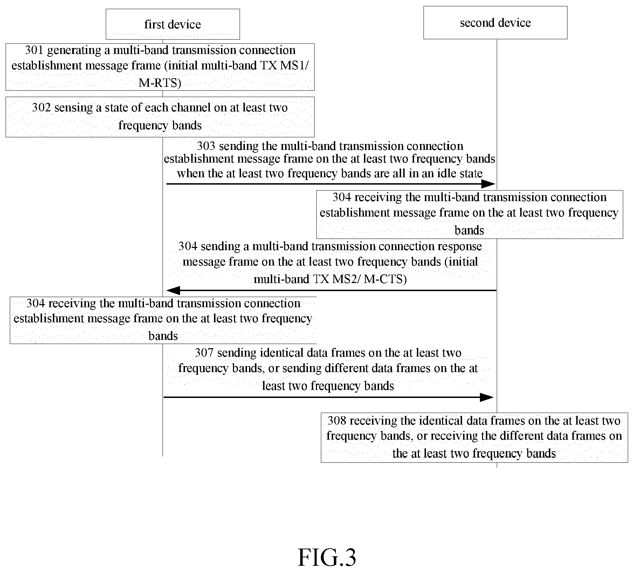

FIG. 3 shows a flowchart of a data transmission method provided by another embodiment of the present disclosure. The method can be executed by the communication system shown in FIG. 1, and the method includes:

In step 301, the first device generates a multi-band transmission connection establishment message frame, and the multi-band transmission connection establishment message frame is used to request simultaneous transmission of data frames on at least two frequency bands.

The multi-band transmission connection establishment message frame is realized by using a management message frame or a control message frame.

In a case where the management message frame is used to realize the multi-band transmission connection establishment message frame, the management message frame may be an initial multi-band transmission request message frame (initial multi-band TX MS1); and in a case where the control message frame is used to realize the multi-band transmission connection establishment message frame, the control message frame may be a multi-band request to send (M-RTS) message frame.

In step 302, the first device senses a state of each channel on the at least two frequency bands.

The first device senses the state of each channel on the at least two frequency bands by using a clear channel assessment (CCA). An energy detection (ED) mechanism is used at a physical layer to sense a signal strength on the channel in the multiple frequency bands; if the sensed signal strength exceeds a threshold, the channel state is determined to be busy; if the sensed signal strength is below the threshold, the channel state is determined to be idle.

As an example of this embodiment, to ensure backward compatibility, the CCA mechanism adopted in the embodiment is consistent with a CCA mechanism in IEEE 802.11a/b/g/n/ac/ax.

In step 303, the first device sends the multi-band transmission connection establishment message frame on the at least two frequency bands when the at least two frequency bands are all in the idle state.

In step 304, the second device receives the multi-band transmission connection establishment message frame on the at least two frequency bands.

In step 305, the second device sends a multi-band transmission connection response message frame on the at least two frequency bands.

The multi-band transmission connection response message frame is realized by using the management message frame or the control message frame. When the second device determines that a data receiving condition is met (there is no conflicting transmission of a hidden node), the second device replies with the multi-band transmission connection response message frame on the at least two frequency bands.

In a case where the management message frame is used to realize the multi-band transmission connection response message frame, the management message frame may be an initial multi-band transmission response message frame (initial multi-band TX MS2); and in a case where the control message frame is used to realize the multi-band transmission connection response message frame, the control message frame may be a multi-band clear to send (M-CTS) message frame.

In step 306, the first device receives the multi-band transmission connection response message frame on the at least two frequency bands.

In step 307, the first device sends identical data frames on the at least two frequency bands; or, sends different data frames on the at least two frequency bands.

The different data frames are obtained after data to be sent is divided into blocks. The data in the different data frames refers to upper layer data, and the upper layer data can be divided into the blocks through a media access control (MAC) layer inside a device. After 100M bytes of data are divided into three blocks and numbered as three different data frames of Block1, Block2 and Block3, these three data frames are transmitted on the frequency bands of 2.4GHz, 5.8GHz and 6-7GHz, respectively; or, the data is divided into the blocks and numbered above the MAC layer inside the device, and transparently transmitted to the MAC layer, after the data is re-encapsulated by the MAC layer to obtain three different data frames, these three data frames are transmitted on the frequency bands of 2.4GHz, 5.8GHz and 6-7GHz, respectively.

The data in the identical data frames also refers to the upper layer data, which can be processed by the MAC layer inside the device to be added with different identifications for transmission on different frequency bands.Identification 1 indicates that the data is transmitted on the 2.4GHz frequency band, identification 2 indicates that the data is transmitted on the 5.8GHz frequency band, and identification 3 indicates that the data is transmitted on the 6-7GHz frequency band; or the data is processed by the upper layer, and is transparently transmitted to the MAC layer. After being encapsulated into the data frame by the MAC layer, the data is transmitted on the frequency bands of 2.4GHz, 5.8GHz and 6-7GHz, respectively.

After receiving the multi-band transmission connection response message frame, the first device simultaneously sends the identical data frames on the at least two frequency bands; or, simultaneously sends the different data frames on the at least two frequency bands.

In step 308, the second device receives the identical data frames on the at least two frequency bands; or, receives the different data frames on the at least two frequency bands.

At a first time, a data frame 1 is sent on the frequency band A, a data frame 2 is sent on the frequency band B, and a data frame 3 is sent on the frequency band C; at a second time, a data frame 4 is sent on the frequency band A, a data frame 5 is sent on the frequency band B, and a data frame 6 is sent on the frequency band C; and at a third time, a data frame 7 is sent on the frequency band A, a data frame 8 is sent on the frequency band B, and a data frame 9 is sent on the frequency band C.

In summary, in the method provided by the embodiments of the present disclosure, by generating the multi-band transmission connection establishment message frame which is used to request the simultaneous transmission of the data frames on the at least two frequency bands, and sending the multi-band transmission connection establishment message frame, the data frames are sent on the at least two frequency bands, thereby achieving simultaneous data transmission on multiple frequency bands, and achieving greater transmission rate and throughput.

In the method provided by the embodiments of the present disclosure, when the first device sends the identical data frames on the at least two frequency bands, the second device can simultaneously receive the identical data frames on the at least two frequency bands, thereby receiving multiple copies of the same data frame to improve the correct rate of decoding.

In the method provided by the embodiments of the present disclosure, when the first device sends the different data frames on the at least two frequency bands, the second device can receive the different data frames on the at least two frequency bands, thereby achieving a greater transmission rate and throughput.

Regarding the foregoing step 204, since the first device simultaneously sends the data frames on the multiple frequency bands, it may occur a case where some frequency bands are occupied by other devices. Therefore, the embodiments of the present disclosure provide the following two embodiments.

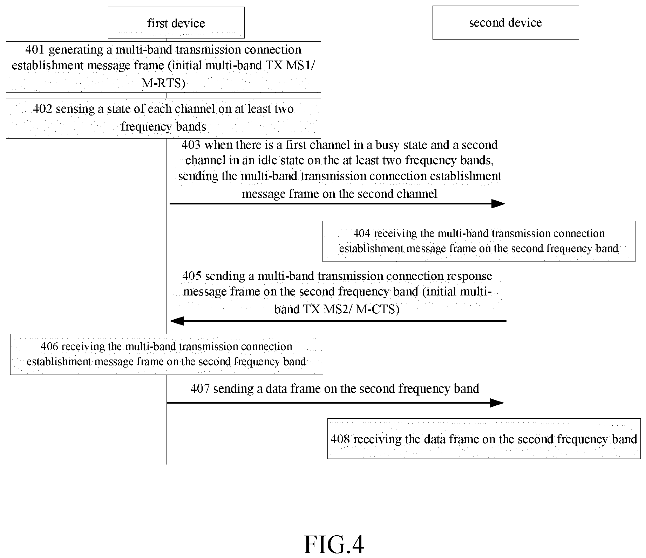

FIG. 4 shows a flowchart of a data transmission method provided by another embodiment of the present disclosure. The method can be executed by the communication system shown in FIG. 1, and includes:
In step 401, the first device generates a multi-band transmission connection establishment message frame, and the multi-band transmission connection establishment message frame is used to request simultaneous transmission of data frames on at least two frequency bands.

The multi-band transmission connection establishment message frame is realized by using a management message frame or a control message frame.

In a case where the management message frame is used to realize the multi-band transmission connection establishment message frame, the management message frame may be an initial multi-band transmission request message frame (initial multi-band TX MS1); and in a case where the control message frame is used to realize the multi-band transmission connection establishment message frame, the control message frame may be a multi-band request to send (M-RTS) message frame.

In step 402, the first device senses a state of each channel on the at least two frequency bands.

The first device senses the state of each channel on the at least two frequency bands by using a clear channel assessment (CCA). An energy detection (ED) mechanism is used at a physical layer to sense a signal strength on the channel in multiple frequency bands; if the sensed signal strength exceeds a threshold, the channel state is determined to be busy; if the sensed signal strength is below the threshold, the channel state is determined to be idle.

As an example of this embodiment, to ensure backward compatibility, the CCA mechanism adopted in the embodiment is consistent with a CCA mechanism in IEEE 802.11a/b/g/n/ac/ax.

The multi-band transmission connection response message frame is realized by using the management message frame or the control message frame. When the second device determines that a data receiving condition is met (there is no conflicting transmission of a hidden node), the second device replies with the multi-band transmission connection response message frame on the at least two frequency bands.

In a case where the management message frame is used to realize the multi-band transmission connection response message frame, the management message frame may be an initial multi-band transmission response message frame (initial multi-band TX MS2); and in a case where the control message frame is used to realize the multi-band transmission connection response message frame, the control message frame may be a multi-band clear to send (M-CTS) message frame.

The different data frames are obtained after data to be sent is divided into blocks. The data in the different data frames refers to upper layer data, and the upper layer data can be divided into the blocks through a media access control (MAC) layer inside a device. After 100M bytes of data are divided into three blocks and numbered as three different data frames of Block1, Block2 and Block3, these three data frames are transmitted on the frequency bands of 2.4GHz, 5.8GHz and 6-7GHz, respectively; or, the data is divided into the blocks and numbered above the MAC layer inside the device, and transparently transmitted to the MAC layer, after the data is re-encapsulated by the MAC layer to obtain three different data frames, these three data frames are transmitted on the frequency bands of 2.4GHz, 5.8GHz and 6-7GHz, respectively.

The data in the identical data frames also refers to the upper layer data, which can be processed by the MAC layer inside the device to be added with different identifications for transmission on different frequency bands. Identification 1 indicates that the data is transmitted on the 2.4GHz frequency band, identification 2 indicates that the data is transmitted on the 5.8GHz frequency band, and identification 3 indicates that the data is transmitted on the 6-7GHz frequency band; or the data is processed by the upper layer, and is transparently transmitted to the MAC layer. After being encapsulated into the data frame by the MAC layer, the data is transmitted on the frequency bands of 2.4GHz, 5.8GHz and 6-7GHz, respectively.

FIG. 5 shows a flowchart of a data transmission method provided by another embodiment of the present disclosure. The method can be executed by the communication system shown in FIG. 1, and includes:
In step 501, the first device generates a multi-band transmission connection establishment message frame, and the multi-band transmission connection establishment message frame is used to request simultaneous transmission of data frames on at least two frequency bands.

The multi-band transmission connection establishment message frame is realized by using a management message frame or a control message frame.

In a case where the management message frame is used to realize the multi-band transmission connection establishment message frame, the management message frame may be an initial multi-band transmission request message frame (initial multi-band TX MS1); and in a case where the control message frame is used to realize the multi-band transmission connection establishment message frame, the control message frame may be a multi-band request to send (M-RTS) message frame.

In step 502, the first device senses a state of each channel on the at least two frequency bands.

The first device senses the state of each channel on the at least two frequency bands by using a clear channel assessment (CCA). An energy detection (ED) mechanism is used at a physical layer to sense a signal strength on the channel in multiple frequency bands; if the sensed signal strength exceeds a threshold, the channel state is determined to be busy; not according to the invention as claimed, if the sensed signal strength is below the threshold, the channel state is determined to be idle.

As an example of this embodiment, to ensure backward compatibility, the CCA mechanism adopted in the embodiment is consistent with a CCA mechanism in IEEE 802.11a/b/g/n/ac/ax.

In step 503, the first device determines a back-off duration when there is a third channel in the busy state φn the at least two frequency bands.

The first device determines the back-off duration by using a random back-off mechanism. Not according to the invention as claimed, the first device performs the random back-off mechanism on the sensed busy channel, and a random number m is selected as m=2ⁿ - 1|, where an initial value of n is 3, the maximum value is 1023, and the back-off duration is m*slotTime, with slotTime =5us.

According to the invention as claimed, there are n third channels and the first device determines the corresponding back-off duration for each third channel by using the random back-bff mechanism, |where n is an integer greater than 1, and the minimum back-off duration among the n back-off durations is determined as the back-off duration for this use.

In step 504, after waiting for the back-off duration, |the first device sends the multi-band transmission connection establishment message frame on the at least two frequency bands;
After waiting for the back-off duration, |the first device senses the state of each channel on the at least two frequency bands again; when the state of each channel on the at least two frequency bands is in the idle state, the first device sends the multi-band transmission connection establishment message frame on the at least two frequency bands,| and step 505 is entered; when for the state of each channel on the at least two frequency bands, there is the third channel in the busy state, the step 503 is executed again.

In the step 505, the second device receives the multi-band transmission connection establishment message frame on the at least two frequency bands.

In step 506, the second device replies with the multi-band transmission connection response message frame on the at least two frequency bands.

The multi-band transmission connection response message frame is realized by using the management message frame or the control message frame. When the second device determines that a data receiving condition is met (there is no conflicting transmission of a hidden node), the second device replies with the multi-band transmission connection response message frame on the at least two frequency bands.

In a case where the management message frame is used to realize the multi-band transmission connection response message frame, the management message frame may be an initial multi-band transmission response message frame (initial multi-band TX MS2); and in a case where the control message frame is used to realize the multi-band transmission connection response message frame, the control message frame may be a multi-band clear to send (M-CTS) message frame.

In step 508, the first device sends the identical data frames on the at least two frequency bands; or, sends the different data frames on the at least two frequency bands.

The different data frames are obtained after the data to be sent is divided into the blocks.

After receiving the multi-band transmission connection response message frame, the first device simultaneously sends the identical data frames on the at least two frequency bands; or, simultaneously sends the different data frames on the at least two frequency bands.

The different data frames are obtained after the data to be sent is divided into the blocks. The data in the different data frames refers to upper layer data, and the upper layer data can be divided into the blocks through a media access control (MAC) layer inside a device. After 100M bytes of data are divided into three blocks and numbered as three different data frames of Block1, Block2 and Block3, these three data frames are transmitted on the frequency bands of 2.4GHz, 5.8GHz and 6-7GHz, respectively; or, the data is divided into the blocks and numbered above the MAC layer inside the device, and transparently transmitted to the MAC layer, after the data is re-encapsulated by the MAC layer to obtain three different data frames, these three data frames are transmitted on the frequency bands of 2.4GHz, 5.8GHz and 6-7GHz, respectively.

The data in the identical data frames also refers to the upper layer data, which can be processed by the MAC layer inside the device to be added with different identifications for transmission on different frequency bands. Identification 1 indicates that the data is transmitted on the 2.4GHz frequency band, identification 2 indicates that the data is transmitted on the 5.8GHz frequency band, and identification 3 indicates that the data is transmitted on the 6-7GHz frequency band; or the data is processed by the upper layer, and is transparently transmitted to the MAC layer. After being encapsulated into the data frame by the MAC layer, the data is transmitted on the frequency bands of 2.4GHz, 5.8GHz and 6-7GHz, respectively.

In step 509, the second device receives the identical data frames on the at least two frequency bands; or, receives the different data frames on the at least two frequency bands.

In summary, in the method provided by the embodiments of the present disclosure, when the channel is busy during the transmission on the multiple frequency bands, data transmission opportunities are regained by using the random back-off mechanism on the multiple frequency bands, thereby providing another data transmission method when the channel is busy, and achieving greater transmission rate and throughput

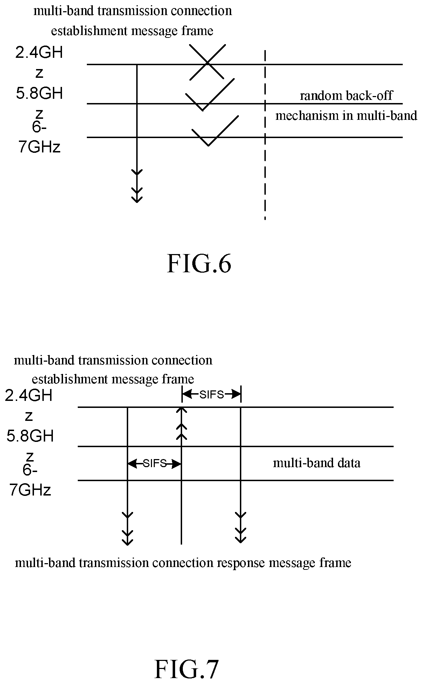

In an example, as shown in FIG. 6, both the first device and the second device support the simultaneous transmission of data frames on the frequency bands of 2.4GHz, 5.8GHz, and 6-7GHz. The first device performs the CCA before sending the multi-band transmission establishment message frame. When it is found that the channel on 2.4GHz is in the busy state, the back-off duration is determined by using the random back-off mechanism, after waiting for the back-off duration, and channels on the three frequency bands are all in the idle state, the first device sends the multi-band transmission establishment message frame on the three frequency bands of 2.4GHz frequency band, 5.8GHz frequency band and 6-7GHz frequency band.

It should be noted that sending times of the multi-band transmission connection establishment message frame on the at least two frequency bands are synchronized, and sending times of the multi-band transmission connection response message frame on the at least two frequency bands are synchronized, as shown in FIG. 7. An interval between the multi-band transmission connection establishment message frame and the multi-band transmission connection response message frame is a short inter-frame space (SIFS). In order to ensure clock synchronization on each frequency band, even if the MCS mode used for data transmission on each frequency band is different, inconsistent parts of time can be filled and complemented for alignment.

In an optional embodiment based on the above-mentioned FIG. 2, FIG. 3, FIG. 4, or FIG. 5, when the first device and the second device make an initial connection, they need to inform both parties of capability information values for simultaneous communication on the at least two frequency bands. In this case, before the first device sends the multi-band transmission connection establishment message frame on the at least two frequency bands, the following steps are further included, as shown in FIG. 8:
In step 801, the first device generates a first message frame, and the first message frame carries first capability information, and the first capability information is used to indicate that simultaneous data transmission on at least two frequency bands is supported by the first device.

The at least two frequency bands include: at least two frequency bands of the 2.4 GHz frequency band, the 5.8 GHz frequency band, and the 6-7 GHz frequency band. The at least two frequency bands also include other communication frequency bands supported by a Wi-Fi protocol. In the following embodiments, the 2.4 GHz frequency band is referred to as frequency band A for short, the 5.8 GHz frequency band is referred to as frequency band B for short, and the 6-7 GHz frequency band is referred to as frequency band C for short.

The first message frame is a multi-band operation request frame.

Exemplarily, when there is a large amount of data needed to be sent by the first device, the first device generates the first message frame.

In step 802, the first device sends the first message frame.

The first device sends the first message frame on a single frequency band. The single frequency band may be a first frequency band, and the single frequency band is a frequency band with which the first device and the second device have established an association.

In step 803, the second device receives the first message frame, and the first message frame carries the first capability information, and the first capability information is used to indicate that the simultaneous data transmission on the at least two frequency bands is supported by the first device.

The second device receives the first message frame on the single frequency band. The second device receives the first message frame on the first frequency band.

In step 804, the second device generates a second message frame, and the second message frame carries second capability information, and the second capability information is used to indicate that the simultaneous data transmission on the at least two frequency bands is supported by the second device.

The second message frame is a multi-band operation response frame.

In step 805, the second device sends the second message frame.

The second device sends the second message frame on the single frequency band, and the single frequency band may be the first frequency band.

In step 806, the first device receives the second message frame, and the second message frame carries the second capability information, and the second capability information is used to indicate that the simultaneous data transmission on the at least two frequency bands is supported by the second device.

The first device receives the second message frame on the single frequency band. The first device receives the second message frame on the first frequency band.

In step 807, the first device determines the at least two frequency bands according to the first capability information and the second capability information.

The first device determines a transmission capability supported by both the first device and the second device according to the first capability information and the second capability information, that is, the at least two frequency bands supported by both the first device and the second device.

The at least two frequency bands include the first frequency band and a second frequency band, the first frequency band is a frequency band used to send the first message frame and the second message frame, and the second frequency band is a frequency band different from the first frequency band.

In step 208, the second device receives the data on the at least two frequency bands according to the first capability information and the second capability information.

The second device determines a transmission capability supported by both the first device and the second device according to the first capability information and the second capability information, that is, the at least two frequency bands supported by both the first device and the second device.

In an optional embodiment based on FIG. 8, the first capability information and the second capability information include the following information item: frequency band identifications of the at least two frequency bands.

The first capability information further includes: at least one of an operating bandwidth supported by the first device, a MCS or key reuse information.

The second capability information further includes: at least one of the operating bandwidth supported by the second device, the MCS or key reuse acknowledgement information.

The operating bandwidth is at least one of a combination of 20MHz, 40MHz, 80MHz, 80+80MHz (discontinuous, non-overlapping)/160MHz (continuous), 160+160MHz (discontinuous, non-overlapping)/320MHz.

The key reuse information is used to indicate that an existing key (a key on the first frequency band) is reused for data encryption.

In an example, 8 bits are used to indicate the frequency band and the operating bandwidth. The number of frequency band identifications is the same as the number of frequency bands. Taking the frequency bands including the 2.4GHz frequency band, the 5.8GHz frequency band and the 6-7GHz frequency band as an example, the frequency band identifications occupy the first 3 bits of the 8 bits, and a first bit of the first 3 bits corresponds to the 2.4GHz frequency band, a second bit corresponds to the 5.8GHz frequency band, and a third bit corresponds to the 6-7GHz frequency band.

When a value of the first bit is 1, it means that the communication on the 2.4GHz frequency band is supported, and when the value of the first bit is 0, it means that the communication on the 2.4GHz frequency band is not supported. When a value of the second bit is 1, it means that the communication on the 5.8GHz frequency band is supported, and when the value of the second bit is 0, it means that the communication on the 5.8GHz frequency band is not supported. When a value of the third bit is 1, it means that the communication on the 6-7GHz frequency band is supported, and when the value of the third bit is 0, it means that the communication on the 6-7GHz frequency band is not supported.

The last 5 bits of the 8 bits are used to indicate the operating bandwidth. A fourth bit corresponds to 20MHz, a fifth bit corresponds to 40MHz, a sixth bit corresponds to 80MHz, a seventh bit corresponds to 80+80MHz (discontinuous, non-overlapping)/160MHz (continuous), and an eighth bit corresponds to 160+160MHz (discontinuous, non-overlapping)/320MHz. When a bit value is 1, it means that the corresponding operating bandwidth is supported, and when the bit value is 0, it means that the corresponding operating bandwidth is not supported.

In an example, each of the foregoing information items is represented by an information element (IE). The IE is a component of a frame (such as a management message frame) with a variable length. Exemplarily, the IE includes an element ID bit, a length bit, and a content bit with a variable length. The length bit is used to indicate the number of content bits. Each information item among the above-mentioned information items may occupy one IE, or two or more information items may occupy the same IE. The element ID of the IE can be represented by a reserved bit in related art, such as 11-15, 43-49, 50-255, etc..

In an optional embodiment based on FIG. 8, the first message frame is a beacon frame, and the second message frame is an association request frame; or, the first message frame is a probe request frame, and the second message frame is a probe response frame; or, the first message frame is an association request frame, and the second message frame is an association response frame; or, the first message frame is an authentication request frame, and the second message frame is an authentication response frame.

The following are apparatus embodiments of the present disclosure. For details that are not described in detail in the apparatus embodiments, reference may be made to the above-mentioned method embodiments.

FIG. 9 shows a block diagram of a data transmission apparatus provided by another embodiment of the present disclosure. The apparatus can be implemented as the first device by means of software, hardware or a combination of the software and the hardware, and includes:
a processing module 920, configured to generate a multi-band transmission connection establishment message frame, and the multi-band transmission connection establishment message frame is used to request simultaneous transmission of data frames on at least two frequency bands;
a sending module 940, configured to send the multi-band transmission connection establishment message frame on the at least two frequency bands; and
the sending module 940 is further configured to send the data frames on the at least two frequency bands.

The processing module 920 may be a hardware device such as a central processing unit or a baseband processor, and is configured to implement steps related to calculation, generation, and processing. The sending module 940 may be a hardware device such as a radio frequency antenna, and is configured to implement steps related to sending.

In an optional embodiment, the multi-band transmission connection establishment message frame includes:
an initial multi-band transmission request message frame (initial multi-band TX MS1); or
a multi-band request to send (M-RTS) message frame.

In an optional embodiment, the sending module is further configured to sense a state of each channel on the at least two frequency bands after waiting for a back-off duration; and send the multi-band transmission connection establishment message frame on the at least two frequency bands when the at least two frequency bands are all in an idle state;
the sending module 940 is configured to send identical data frames; or send different data frames on the at least two frequency bands, and the different data frames are obtained after data to be sent is divided into blocks.

The sending module 940 is configured to sense a channel state on the at least two frequency bands;
the processing module 920 is configured to determine the back-off duration when there is a third channel in a busy state on the at least two frequency bands; and
the sending module 940 is configured to send the multi-band transmission connection establishment message frame on the at least two frequency bands again after waiting for the back-off duration.

The processing module 920 is configured to determine the back-off duration by using a random back-off mechanism.

According to the invention as claimed, the processing module 920 is configured to determine the corresponding back-off duration for each third channel by using the random back-off mechanism when there are n third channels, where n is an integer greater than 1; and determine a minimum back-off duration among the n back-off durations as the back-off duration.

In an optional embodiment, sending times of the multi-band transmission connection establishment message frame on the at least two frequency bands are synchronized.

FIG. 10 shows a block diagram of a data transmission apparatus provided by another embodiment of the present disclosure. The apparatus can be implemented as the second device by means of software, hardware or a combination of the software and the hardware, and includes:
a receiving module 1020, configured to receive a multi-band transmission connection establishment message frame on at least two frequency bands, and the multi-band transmission connection establishment message frame is used to request simultaneous transmission of data frames on at least two frequency bands; and
the receiving module 1020 is further configured to receive the data frames on the at least two frequency bands.

The receiving module 1120 is a hardware device such as the radio frequency antenna, and is configured to implement steps related to reception.

In an optional embodiment, the receiving module 1120 is configured to receive identical data frames on the at least two frequency bands; or, the receiving module 1120 is configured to receive different data frames on the at least two frequency bands, and the different data frames are obtained after data to be sent is divided into blocks;
the data frames are sent when the at least two frequency bands are all in an idle state.

FIG. 11 shows a schematic structural diagram of a wireless communication device provided by an embodiment of the present disclosure. The wireless communication device may be the first device or the second device. The wireless communication device includes: a processor 101, a receiver 102, a transmitter 103, a memory 104, and a bus 105.

The processor 101 includes one or more processing cores, and the processor 101 executes various functional applications and information processing by running software programs and modules.

The receiver 102 and the transmitter 103 may be implemented as one communication component, and the communication component may be a communication chip.

The memory 104 is connected to the processor 101 through the bus 105.

The memory 104 may be configured to store at least one instruction, and the processor 101 is configured to execute the at least one instruction, so as to implement each step in the foregoing method embodiments.

In addition, the memory 104 can be implemented by any type of volatile or non-volatile storage device or a combination of these storage devices. The volatile or non-volatile storage device includes, but is not limited to: a magnetic disk or an optical disk, an electrically erasable and programmable read-only memory (EEPROM), an erasable programmable read-only memory (EPROM), a static random access memory (SRAM), a read-only memory (ROM), a magnetic memory, a flash memory, a programmable read-only memory (PROM).

An embodiment of the present disclosure also provides a computer-readable storage medium in which at least one instruction, at least one program, a code set or an instruction set is stored, and the at least one instruction, the at least one program, the code set or the instruction set is loaded and executed by a processor to implement each step in the foregoing method embodiments.

Those of ordinary skill in the art should know that all or part of the steps described in the above embodiments can be completed through hardware, and may also be completed through related hardware instructed by a program. The program may be stored in a computer-readable storage medium. The storage medium may be a read-only memory, a magnetic disk, an optical disc or the like.

The above descriptions are only embodiments of the present disclosure and are not intended to limit the present disclosure. Any modification, equivalent replacement, improvement and the like within the principle of the present disclosure shall be included in the present disclosure.

## Claims

1. A data transmission method, comprising:
generating (501) a multi-band transmission connection establishment message frame,
wherein the multi-band transmission connection establishment message frame is used to request simultaneous transmission of data frames on at least two frequency bands;
sending (504) the multi-band transmission connection establishment message frame on the at least two frequency bands; and
sending (508) the data frames on the at least two frequency bands,
wherein the sending the (504) multi-band transmission connection establishment message frame on the at least two frequency bands comprises:
sensing (502) a channel state on the at least two frequency bands; and
determining (503) a back-off duration when there is a third channel in a busy state on the at least two frequency bands; and
sending (504) the multi-band transmission connection establishment message frame on the at least two frequency bands after waiting for the back-off duration,
wherein the determining (503) the back-off duration comprises:
determining a corresponding back-off duration for each third channel by using the random back-off mechanism when there are n third channels, where n is an integer greater than 1; and
determining a minimum back-off duration among the n back-off durations as the back-off duration.

2. The method according to claim 1, wherein the multi-band transmission connection establishment message frame comprises:
an initial multi-band transmission request message frame; or
a multi-band request to send message frame.

3. The method according to claim 1, wherein the sending (504) the multi-band transmission connection establishment message frame on the at least two frequency bands further comprises:
after waiting for the back-off duration, sensing a state of each channel on the at least two frequency bands; and
sending (504) the multi-band transmission connection establishment message frame on the at least two frequency bands when the at least two frequency bands are all in an idle state;
the sending (508) the data frames on the at least two frequency bands comprises:
sending (508) identical data frames; or sending (508) different data frames on the at least two frequency bands, wherein the different data frames are obtained after data to be sent is divided into blocks.

4. The method according to any one of claims 1 to 3, wherein:
sending times of the multi-band transmission connection establishment message frame on the at least two frequency bands are synchronized.

5. A data transmission apparatus, comprising:
a processing module (920), configured to generate a multi-band transmission connection establishment message frame, wherein the multi-band transmission connection establishment message frame is used to request simultaneous transmission of data frames on at least two frequency bands; and
a sending module (940) configured to send the multi-band transmission connection establishment message frame on the at least two frequency bands;
wherein the sending module (940) is further configured to send the data frames on the at least two frequency bands,
wherein the sending module (940) is configured to sense a channel state on the at least two frequency bands;
the processing module (920) is configured to determine a back-off duration when there is a third channel in a busy state on the at least two frequency bands; and
the sending module (940) is configured to send the multi-band transmission connection establishment message frame on the at least two frequency bands again after waiting for the back-off duration; and
wherein the processing module (920) is configured to determine a corresponding back-off duration for each third channel by using a random back-off mechanism when there are n third channels, where n is an integer greater than 1; and determine a minimum back-off duration among the n back-off durations as the back-off duration.

6. The apparatus according to claim 5, wherein the multi-band transmission connection establishment message frame comprises:
an initial multi-band transmission request message frame; or
a multi-band request to send message frame.

7. The apparatus according to claim 5, wherein:
the sending module (940) is further configured to sense a state of each channel on the at least two frequency bands after waiting for the back-off duration;
and send the multi-band transmission connection establishment message frame on the at least two frequency bands when the at least two frequency bands are all in an idle state; and
the sending module (940) is configured to send identical data frames; or send different data frames on the at least two frequency bands, wherein the different data frames are obtained after data to be sent is divided into blocks.

8. The apparatus according to any one of claims 5 to 7, wherein:
sending times of the multi-band transmission connection establishment message frame on the at least two frequency bands are synchronized.

9. A computer-readable storage medium having stored therein at least one instruction, at least one program, a code set or an instruction set, **characterized in that** the at least one instruction, the at least one program, the code set or the instruction set is loaded and executed by a processor to implement the data transmission method according to any one of claims 1 to 4.

## Patentansprüche

1. Datenübertragungsverfahren mit den folgenden Schritten:
Erzeugen (501) eines Multiband-Übertragungsverbindungsherstellungsnachrichtenrahmens, wobei der Multiband-Übertragungsverbindungsherstellungsnachrichtenrahmen zur Anforderung einer simultanen Übertragung von Datenrahmen auf mindestens zwei Frequenzbändern verwendet wird;
Senden (504) des Multiband-Übertragungsverbindungsherstellungsnachrichtenrahmens auf den mindestens zwei Frequenzbändern; und
Senden (508) der Datenrahmen auf den mindestens zwei Frequenzbändern, wobei das Senden (504) des Multiband-Übertragungsverbindungsherstellungsnachrichtenrahmens auf den mindestens zwei Frequenzbändern die folgenden Schritte aufweist:
Erfassen (502) eines Kanalzustands auf den mindestens zwei Frequenzbändern; und
Bestimmen (503) einer Back-Off-Dauer, wenn sich ein dritter Kanal auf den mindestes zwei Frequenzbändern in einem Belegtzustand befindet; und
Senden (504) des Multiband-Übertragungsverbindungsherstellungsnachrichtenrahmens auf den mindestens zwei Frequenzbändern nach dem Abwarten der Back-off-Dauer,
wobei das Bestimmen (503) der Back-off-Dauer die folgenden Schritte aufweist:
Bestimmen einer entsprechenden Back-Off-Dauer für jeden dritten Kanal unter Verwendung des Random Back-Off-Mechanismus, wenn n dritte Kanäle vorliegen, wobei n eine ganze Zahl größer als 1 ist; und
Bestimmen einer Mindest-Back-Off-Dauer unter den n Back-Off-Dauern als die Back-Off-Dauer.

2. Verfahren nach Anspruch 1, bei welchem der Multiband-Übertragungsverbindungsherstellungsnachrichtenrahmen aufweist:
einen anfänglichen Multiband-Übertragungsanforderungsnachrichtenrahmen; oder
eine Multibandanforderung des Sendens des Nachrichtenrahmens.

3. Verfahren nach Anspruch 1, bei welchem das Senden (504) des Multiband-Übertragungsverbindungsherstellungsnachrichtenrahmens auf den mindestens zwei Frequenzbändern ferner die folgenden Schritte aufweist:
Erfassen des Zustands jedes Kanals auf den mindestens zwei Frequenzbändern; und
Senden (504) des Multiband-Übertragungsverbindungsherstellungsnachrichtenrahmens auf den mindestens zwei Frequenzbändern, wenn sich die mindestens zwei Frequenzbänder sämtlich in einem Ruhezustand befinden;
wobei das Senden (508) der Datenrahmen auf den mindestens zwei Frequenzbändern die folgenden Schritte aufweist:
Senden (508) identischer Datenrahmen; oder
Senden (508) unterschiedlicher Datenrahmen auf den mindestens zwei Frequenzbändern, wobei die unterschiedlichen Datenrahmen erhalten werden, nachdem zu sendende Daten in Blöcke unterteilt wurden.

4. Verfahren nach einem der Ansprüche 1 bis 3, bei welchem:
die Sendezeiten des Multiband-Übertragungsverbindungsherstellungsnachrichtenrahmens auf den mindestens zwei Frequenzbändern synchronisiert sind.

5. Datenübertragungsvorrichtung mit:
einem Verarbeitungsmodul (920), das zum Erzeugen eines Multiband-Übertragungsverbindungsherstellungsnachrichtenrahmens ausgebildet ist, wobei der Multiband-Übertragungsverbindungsherstellungsnachrichtenrahmen zur Anforderung einer simultanen Übertragung von Datenrahmen auf mindestens zwei Frequenzbändern verwendet wird;
einem Sendemodul (940), das zum Senden des Multiband-Übertragungsverbindungsherstellungsnachrichtenrahmens auf den mindestens zwei Frequenzbändern ausgebildet ist; und
wobei das Sendemodul (940) dazu ausgebildet ist, einen Kanalzustand auf den mindestens zwei Frequenzbändern zu erfassen;
das Verarbeitungsmodul (920) dazu ausgebildet ist, eine Back-Off-Dauer zu bestimmen, wenn sich ein dritter Kanal auf den mindestes zwei Frequenzbändern in einem Belegtzustand befindet; und
das Sendemodul (940) dazu ausgebildet ist, den Multiband-Übertragungsverbindungsherstellungsnachrichtenrahmen auf den mindestens zwei Frequenzbändern nach dem Abwarten der Back-off-Dauer zu senden; und
wobei das Verarbeitungsmodul (920) dazu ausgebildet ist, eine entsprechende Back-Off-Dauer für jeden dritten Kanal unter Verwendung des Random Back-Off-Mechanismus zu bestimmen, wenn n dritte Kanäle vorliegen, wobei n eine ganze Zahl größer als 1 ist, und eine Mindest-Back-Off-Dauer unter den n Back-Off-Dauern als die Back-Off-Dauer zu bestimmen.

6. Vorrichtung nach Anspruch 5, bei welcher der Multiband-Übertragungsverbindungsherstellungsnachrichtenrahmen aufweist:
einen anfänglichen Multiband-Übertragungsanforderungsnachrichtenrahmen; oder
eine Multibandanforderung des Sendens des Nachrichtenrahmens.

7. Vorrichtung nach Anspruch 5, bei welcher:
das Sendemodul (940) ferner dazu ausgebildet ist, nach dem Abwarten der Back-Off-Dauer des Zustands jedes Kanals auf den mindestens zwei Frequenzbändern zu erfassen, und den Multiband-Übertragungsverbindungsherstellungsnachrichtenrahmen auf den mindestens zwei Frequenzbändern zu senden, wenn sich die mindestens zwei Frequenzbänder sämtlich in einem Ruhezustand befinden; und
das Sendemodul (940) dazu ausgebildet ist, identische Datenrahmen zu senden; oder unterschiedliche Datenrahmen auf den mindestens zwei Frequenzbändern zu senden, wobei die unterschiedlichen Datenrahmen erhalten werden, nachdem zu sendende Daten in Blöcke unterteilt wurden.

8. Vorrichtung nach einem der Ansprüche 5 bis 7, bei welcher:
die Sendezeiten des Multiband-Übertragungsverbindungsherstellungsnachrichtenrahmens auf den mindestens zwei Frequenzbändern synchronisiert sind.

9. Computerlesbares Speichermedium, auf welchem mindestens ein Befehl, mindestens ein Programm, ein Code-Satz oder ein Befehlssatz gespeichert ist, **dadurch gekennzeichnet, dass** der welchem mindestens eine Befehl, das mindestens eine Programm, der Code-Satz oder der Befehlssatz von einem Prozessor geladen und ausgeführt wird, um das Datenübertragungsverfahren nach einem der Ansprüche 1 bis 4 zu implementieren.

## Revendications

1. Procédé de transmission de données, comprenant :
la génération (501) d'une trame de message d'établissement de connexion de transmission multibande, dans lequel la trame de message d'établissement de connexion de transmission multibande est utilisée pour demander une transmission simultanée de trames de données sur au moins deux bandes de fréquence ; l'envoi (504) de la trame de message d'établissement de connexion de transmission multibande sur les au moins deux bandes de fréquence ; et
l'envoi (508) des trames de données sur les au moins deux bandes de fréquence, dans lequel l'envoi (504) de la trame de message d'établissement de connexion de transmission multibande sur les au moins deux bandes de fréquence comprend :
le captage (502) d'un état de canal sur les au moins deux bandes de fréquence ; et
la détermination (503) d'une durée de délai d'attente lorsqu'il y a un troisième canal dans un état occupé sur les au moins deux bandes de fréquence ; et
l'envoi (504) de la trame de message d'établissement de connexion de transmission multibande sur les au moins deux bandes de fréquence après avoir attendu la durée de délai d'attente,
dans lequel la détermination (503) de la durée de délai d'attente comprend :
la détermination d'une durée de délai d'attente correspondante pour chaque troisième canal en utilisant le mécanisme de délai d'attente aléatoire lorsqu'il y a n troisièmes canaux, où n est un nombre entier supérieur à 1 ; et
la détermination d'une durée de délai d'attente minimale parmi les n durées de délai d'attente en guise de durée de délai d'attente.

2. Procédé selon la revendication 1, dans lequel la trame de message d'établissement de connexion de transmission multibande comprend :
une trame de message de demande de transmission multibande initiale ; ou
une demande multibande pour envoyer une trame de message.

3. Procédé selon la revendication 1, dans lequel l'envoi (504) de la trame de message d'établissement de connexion de transmission multibande sur les au moins deux bandes de fréquence comprend en outre :
après avoir attendu la durée de délai d'attente, le captage d'un état de chaque canal sur les au moins deux bandes de fréquence ; et
l'envoi (504) de la trame de message d'établissement de connexion de transmission multibande sur les au moins deux bandes de fréquence lorsque les au moins deux bandes de fréquence sont toutes dans un état de repos ;
l'envoi (508) des trames de données sur les au moins deux bandes de fréquence comprend :
l'envoi (508) de trames de données identiques ; ou l'envoi (508) de trames de données différentes sur les au moins deux bandes de fréquence, dans lequel les trames de données différentes sont obtenues après que les données à envoyer ont été divisées en blocs.

4. Procédé selon l'une quelconque des revendications 1 à 3, dans lequel :
les temps d'envoi de la trame de message d'établissement de connexion de transmission multibande sur les au moins deux bandes de fréquence sont synchronisés.

5. Appareil de transmission de données, comprenant :
un module de traitement (920), configuré pour générer une trame de message d'établissement de connexion de transmission multibande, dans lequel la trame de message d'établissement de connexion de transmission multibande est utilisée pour demander une transmission simultanée de trames de données sur au moins deux bandes de fréquence ; et
un module d'envoi (940) configuré pour envoyer la trame de message d'établissement de connexion de transmission multibande sur les au moins deux bandes de fréquence ;
dans lequel le module d'envoi (940) est configuré en outre pour envoyer les trames de données sur les au moins deux bandes de fréquence,
dans lequel le module d'envoi (940) est configuré pour capter un état de canal sur les au moins deux bandes de fréquence ;
le module de traitement (920) est configuré pour déterminer une durée de délai d'attente lorsqu'il y a un troisième canal dans un état occupé sur les au moins deux bandes de fréquence ; et
le module d'envoi (940) est configuré pour envoyer la trame de message d'établissement de connexion de transmission multibande sur les au moins deux bandes de fréquence de nouveau après avoir attendu la durée de délai d'attente ; et
dans lequel le module de traitement (920) est configuré pour déterminer une durée de délai d'attente correspondante pour chaque troisième canal en utilisant un mécanisme de délai d'attente aléatoire lorsqu'il y a n troisièmes canaux, où n est un nombre entier supérieur à 1 ; et déterminer une durée de délai d'attente minimale parmi les n durées de délai d'attente en guise de durée de délai d'attente.

6. Appareil selon la revendication 5, dans lequel la trame de message d'établissement de connexion de transmission multibande comprend :
une trame de message de demande de transmission multibande initiale ; ou
une demande multibande pour envoyer une trame de message.

7. Appareil selon la revendication 5, dans lequel :
le module d'envoi (940) est configuré en outre pour capter un état de chaque canal sur les au moins deux bandes de fréquence après avoir attendu la durée de délai d'attente ;
et envoyer la trame de message d'établissement de connexion de transmission multibande sur les au moins deux bandes de fréquence lorsque les au moins deux bandes de fréquence sont toutes dans un état de repos ; et
le module d'envoi (940) est configuré pour envoyer des trames de données identiques ; ou envoyer des trames de données différentes sur les au moins deux bandes de fréquence, dans lequel les trames de données différentes sont obtenues après que les données à envoyer ont été divisées en blocs.

8. Appareil selon l'une quelconque des revendications 5 à 7, dans lequel :
les temps d'envoi de la trame de message d'établissement de connexion de transmission multibande sur les au moins deux bandes de fréquence sont synchronisés.

9. Support de stockage lisible par ordinateur dans lequel est stocké au moins une instruction, au moins un programme, un jeu de codes ou un jeu d'instructions, **caractérisé en ce que** l'au moins une instruction, l'au moins un programme, le jeu de codes ou le jeu d'instructions est chargé et exécuté par un processeur pour implémenter le procédé de transmission de données selon l'une quelconque des revendications 1 à 4.
